# EUROPÄISCHE PATENTSCHRIFT

(11) **EP 2 002 413 B1**
(45) Veröffentlichungstag und Bekanntmachung des Hinweises auf die Patenterteilung: **08.08.2012**
(21) Anmeldenummer: 07711665.5
(22) Anmeldetag: 26.02.2007
(51) Int. Cl.: H02M 3/335, G08C 19/02

(54) **BIDIREKTIONALER, GALVANISCH GETRENNTER ÜBERTRAGUNGSKANAL**
BIDIRECTIONAL, DC-ISOLATED TRANSMISSION CHANNEL
CANAL DE TRANSMISSION BIDIRECTIONNEL SÉPARÉ GALVANIQUEMENT

(30) Priorität: 27.02.2006 DE 102006009506
(43) Veröffentlichungstag der Anmeldung: 17.12.2008
(73) Patentinhaber: Phoenix Contact GmbH & Co. KG, 32825 Blomberg (DE)
(72) Erfinder: BLANKE, Jörg, 32657 Lemgo (DE); MEIER, Heinz-Wilhelm, 32689 Kalletal (DE)
(74) Vertreter: Kampfenkel, Klaus
(86) Internationale Anmeldenummer: PCT/EP2007/001640
(87) Internationale Veröffentlichungsnummer: WO 2007/098909

(56) Entgegenhaltungen:
- WO-A-91/13417
- DE-A1- 3 407 324
- DE-A1- 3 533 278
- DE-A1- 4 421 837
- DE-A1- 10 217 447

## Beschreibung

### Gebiet der Erfindung

Die Erfindung bezieht sich auf eine Anordnung und ein Verfahren zur potentialgetrennten Übertragung von Gleich- und Wechselstromsignalen als Messsignale und als Meldesignale zwischen zwei Sende- und Empfangssystemen.

### Hintergrund der Erfindung

Anordnungen für derartige Zwecke werden z.B. in DE 297 18 405 U1, DE 298 16 659 U1 und EP 0 658 866 B1 beschrieben. In diesen Dokumenten werden Verfahren offenbart, bei denen in einem ersten Kanal das Messsignal und in einem zweiten Kanal das Meldesignal übertragen werden. Der erste Kanal umfasst eine Koppelstufe und der zweite Kanal einen Übertrager oder eine weitere Koppelstufe. Insgesamt werden also zwei galvanisch getrennte Kanäle benötigt. Die Verwendung von zwei galvanisch getrennten Kanälen ist aber kostenintensiv und erfordert einen hohen Platzbedarf.

Bei einem Signal-Speisetrenner für Messsignale (DE 103 22 262 A1) wird zwar nur ein Zweileitungskanal für die Übertragung der Signale benötigt, bei denen ein Spannungswandler für die galvanische Trennung in der Übertragungstrecke benutzt wird, jedoch benötigt man eine Hilfsenergie-Einspeiseschaltung, um die empfangenen Spannungssignale je nach aktuellem Leistungsbedarf aufzubereiten. Bei dieser Schaltung können jedoch keine Sende- und Empfangssysteme mit aktiven Stromausgängen angeschlossen werden, weil die Energie von der Einspeiseschaltung zur Verfügung gestellt wird und so zwei Spannungsquellen gegeneinander arbeiten würden.

Es ist auch eine Schaltungsanordnung zur potentialfreien Signalübertragung zwischen zwei elektronischen Einheiten mittels eines Transformators bekannt (DE 35 33 278 A1), bei der die Sekundärwicklung des Transformators beim Vorliegen eines Rückmeldesignals kurzgeschlossen wird. Dadurch wird ein sehr hoher Strom in der Primärseite erzeugt, so dass ein dort vorhandener Verstärker in die Sättigung geht, was durch Komparatoren erfasst und als Rückmeldesignal ausgewertet wird. Ansteuersignal und Rückmeldesignal müssen somit nacheinander erfolgen, d.h. das gleichzeitige Übertragen eines Stromsignals von der einen Einheit und eines Spannungssignals von der anderen Einheit über einen einzigen Zweileitungskanal ist nicht möglich.

Bei einem multifunktionalen Trenntransformator (WO 91/13417) ist eine Sensorschaltung über einen Trennwandler mit einer Ausgangsschaltung verbunden, in welcher Gleichstromsignale zur Weiterleitung in einen Stromkreis erzeugt werden. Andererseits werden die Stromversorgung und die Programmierung der Sensorschaltung von der Ausgansgschaltung über den Trennwandler hinweg besorgt. Primär- und Sekundärseite des Trennwandlers umfassen jeweils mehrere zueinander parallele Leitungen, von denen keine einen elektronischen I/I- oder I/U-Wandler aufweist und virtuell kurzgeschlossen wird, um in einen Gleichstromübertrager einbezogen zu werden.

### Allgemeine Beschreibung der Erfindung

Der Erfindung liegt die Aufgabe zugrunde, einen bidirektionalen, galvanisch getrennten Übertragungskanal zu schaffen, der die gleichzeitige Übertragung von Signalen ausgehend von beiden Sende- und Empfangsssystemen über Kanalabschnitte mit je zwei Leitungen ermöglicht.

Die Aufgabe wird mit einer Anordnung zur potentialgesteuerten Übertragung von Gleich- und Wechselstromsignalen zwischen einem ersten Sende- und Empfangssystem und einen zweiten Sende- und Empfangssystem gelöst, das folgende Merkmale aufweist:
Abschnitte von Sende- und Empfangsleitungspaaren, welche die beiden Sende- und Empfangssysteme über einen einzigen Zweileitungskanal verbinden;
ein Gleichstromübertrager unter Einschluss eines Trennwandlers mit einem Primärkreis und einem Sekundarkreis, der für die Signalübertragung mit Gleichstromsignalen im Kurzschluss betrieben wird, wobei der Gleichstromübertrager Gleichstromsignale in Wechselstromsignale, und diese zurück in Gleichstromsignale bei galvanischer Trennung der Leitungsabschnitte wandelt; ein elektronischer I/I- oder I/U-Wandler, an dessen Eingangsseite die über den Kanal übertragenen Signale anliegen und an dessen Ausgangsseite Nutzsignale als Strom- oder Spannungssignale an das zweite Sende- und Empfangssystem abgegeben werden; und
ein Meldesignalgeber, der sekundärseitig an den Gleichstromübertrager für die Übertragung des Meldesignals angeschlossen wird, so dass primärseitig eine Spannungsänderung feststellbar ist, die von dem ersten Sende- und Empfangssystem als übertragendes Meldesignal auswertbar ist.

Die Aufgabe wird auch mit einem Verfahren zur potentialgetrennten Übertragung von Gleich- und Wechselstromsignalen zwischen einem ersten Sende- und Empfangssystem und einem zweiten Sende- und Empfangssystem gelöst, das folgende Schritte umfasst:
in dem ersten Sende- und Empfangssystem werden Messsignale gewonnen, die zur Übertragung über einen Zweileitungskanal, der galvanisch voneinander getrennte Abschnitte aufweist, als Gleich- und Wechselstromsignale aufbereitet werden;
die Gleich- und Wechselstromsignale werden unter Benutzung eines Gleichstromübertragers mit Trennwandler über den Zweileitungskanal einem elektronischen I/I- oder I/U-Wandler zugeführt;
der elektronische I/I- oder 1/U-Wandler gewinnt aus den Gleich- und Wechselstromsignalen ein dem Messsignal korrespondierendes Strom- oder Spannungssignal zurück und stellt es dem zweiten Sende- und Empfangssystem zur Verfügung;
im Falle der Übertragung eines Meldesignals an das erste Sende- und Empfangssystem vom zweiten Sende- und Empfangssystem aus wird das Meldesignal dem Sekundärkreis des Gleichstromübertragers zugeführt und über den Primärkreis dem ersten Sende- und Empfangssystem zugeleitet.

Bei der erfindungsgemäßen Anordnung werden über den gleichen galvanisch getrennten Kanal ein vorzugsweise Gleichstromsignal als Messsignal und ein Gleich/Wechselspannungsrücksignal als Meldesignal übertragen. Hierzu befinden sich zwischen zwei elektronischen Geräten ein Gleichstromübertrager mit Trennwandler und ein elektronischer I/I-Wandler oder I/U-Wandler. Die beiden elektronischen Geräte, der Gleichstromübertrager und der I/I- oder I/U-Wandler sind hintereinander mittels Abschnitten von Zweidrahtleitungen verbunden. Der Trennwandler dient der galvanischen Trennung der Stromkreise der beiden Endgeräte. Der Gleichstromübertrager wird für die eine Signalrichtung im Kurzschluss betrieben, so dass im wesentlichen keine Leistung übertragen wird.

Auf der Primärseite des Gleichstromübertragers wird das vom ersten Endgerät ankommende, vorzugsweise Gleichstromsignal, in ein Wechselstromsignal umgewandelt. Auf der Sekundärseite wird aus dem dort eintreffenden Wechselstromsignal wieder ein Gleichstromsignal gemacht.

Zur schaltungstechnischen Realisierung des Gleichstromübertragers bieten sich mehrere Möglichkeiten an. Zum einen kann der Gleichstromübertrager als Halbbrückenstromwandler mit aktiven Schaltern (Transistoren, Analogschaltern, etc.) gebildet werden, die auf der Sekundärseite auch durch Dioden ersetzt werden können, zum anderen kann der Gleichstromübertrager als Vollbrückenstromwandler realisiert werden. Auch ist es möglich, den Gleichstromwübertrager mit einem Trennwandler mit Mittelanzapfung zu konstruieren.

Um sicherzustellen, dass der Gleichstromübertrager im Kurzschluss betrieben wird, wird auf seiner Sekundärseite ein I/I-Wandler eingesetzt, der den Gleichstromübertrager vom zweiten Endgerät entkoppelt.

Soll dass zweite Endgerät ein Rücksignal an das erste Endgerät abgeben, so kann dieses als Impuls-, Gleich- oder Wechselspannungssignal an verschiedenen Stellen auf der Sekundärseite des Gleichstromübertragers eingespeist werden.

Ein erste Möglichkeit zur Einspeisung des Rücksignals besteht darin, ein mit der Sekundärseite des Gleichstromübertragers in Reihe geschaltete gesteuerte Spannungsquelle zu verwenden. Ferner kann das Rücksignal an einem Eingang des I/I-oder I/U-Wandlers angelegt werden.

Die Einspeisung dieses Impuls-, Gleich- oder Wechselspannungssignals führt zu einer Aufhebung des Kurzschlusses der Sekundärseite des Gleichstromübertragers, was dazu führt, dass das vom ersten elektronischen Gerät ausgesandte vorzugsweise Gleichstromsignal nur dann weiterhin getrieben werden kann, wenn primärseitig die Spannung um den Wert des sekundärseitig eingespeisten Impuls-, Gleich- oder Wechselspannungssignals erhöht wird. Auf diese Weise kann primärseitig das sekundärseitig eingespeiste Impuls-, Gleich- oder Wechselspannungssignal gemessen und als Rücksignal bewertet werden.

Im Ergebnis ist kein zweiter galvanisch getrennter Übertragungskanal notwendig, um entgegen der Richtung des vorzugsweise Gleichstromsignals ein Rücksignal zu übertragen.

Haupteinsatzbereiche für eine derartige Anordnung sind Trennverstärker mit HART-Kommunikation im Ex- und Nicht-Ex-Bereich. Bei dem im Ex-Bereich verwendeten elektronischen Gerät kann es sich beispielsweise um Vorrichtungen zur Messung von Druck- und/oder Temperaturwerten oder einem Aktor, z. B. einem Ventil, handeln. Bei dem im Nicht-Ex-Bereich eingesetzten elektronischen Gerät kann es sich beispielsweise um einen Leitstand zur Überwachung der "im Feld" gemessenen Werte handeln.

Weiterhin ist es denkbar, die erfindungsgemäße Anordnung zur Rückmeldung von Melde- und Statussignalen, z.B. "Drahtbruch", "Kurzschluss" etc., zu verwenden.

### Kurze Beschreibung der Zeichnungen

Zum besseren Verständnis der vorliegenden Erfindung wird Bezug auf die beigefügten Zeichnungen genommen.

Dabei zeigt:
- Fig. 1: in einem Blockschaltbild eine schematische Darstellung des prinzipiellen Aufbaus der erfindungsgemäßen Anordnung,
- Fig. 2: in einem Prinzipschaltbild hinsichtlich der Einkoppelung der Meldesignale den Aufbau eines ersten Ausführungsbeispiels der erfindungsgemäßen Anordnung,
- Fig. 3: in einem Prinzipschaltbild hinsichtlich der Einkoppelung der Meldesignale den Aufbau eines zweiten Ausführungsbeispiels der erfindungsgemäßen Anordnung,
- Fig. 4: den Schaltungsaufbau eines Ausführungsbeispiels der erfindungsgemäßen Anordnung nach Fig. 3,
- Fig. 5: den Schaltungsaufbau eines Ausführungsbeispiels der erfindungsgemäßen Anordnung nach Fig. 2,
- Fig. 6: in einem Schaltbild die erfindungsgemäße Anordnung nach Fig. 2 mit einem beispielhaften Halbbrückenstromwandler,
- Fig. 7: in einem Schaltbild die erfindungsgemäße Anordnung nach Fig. 3 mit einem beispielhaften Halbbrückenstromwandler,
- Fig. 8: in einem Schaltbild die erfindungsgemäße Anordnung mit einem Vollbrückenstromwandler,
- Fig. 9: in einem Schaltbild die erfindungsgemäße Anordnung mit einem Übertrager mit Mittelanzapfung als Stromwandler, und
- Fig. 10: in einem Schaltbild die erfindungsgemäße Anordnung nach Fig. 3 mit einem weiteren beispielhaften Halbbrückenstromwandler.

### Detaillierte Beschreibung

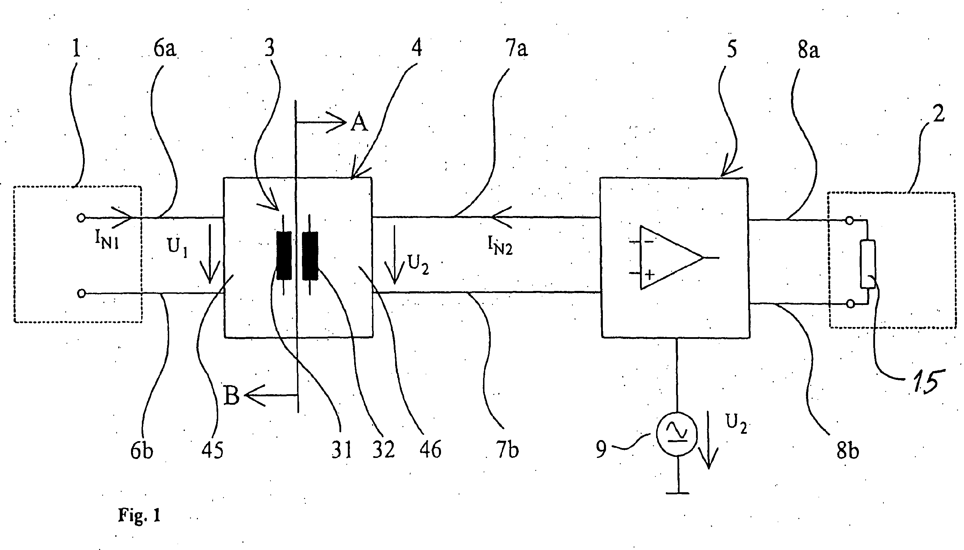

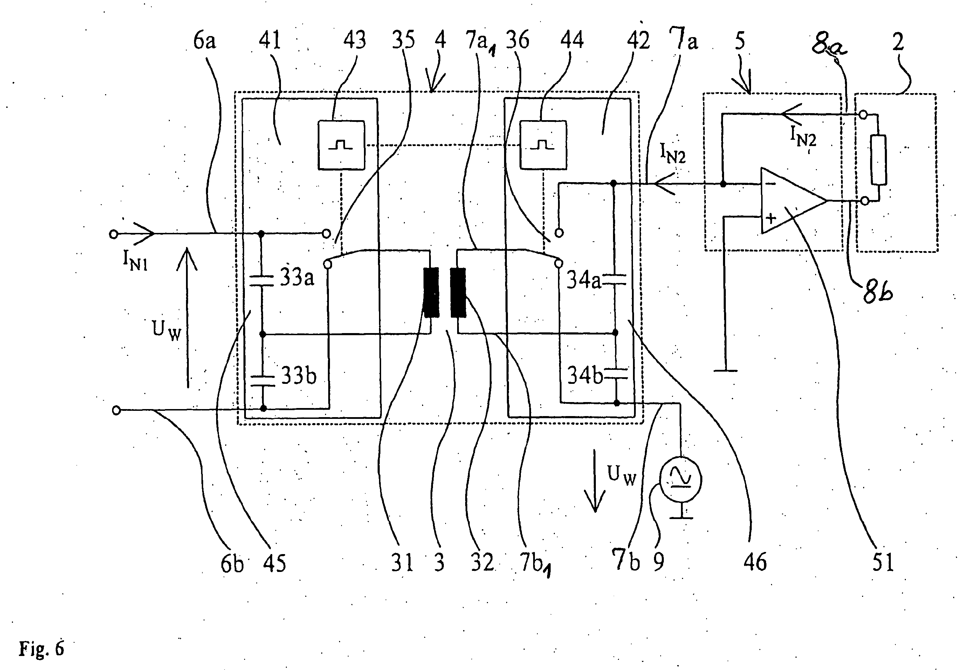

Fig. 1 zeigt in einem Schaltbild den prinzipiellen Aufbau der erfindungsgemäßen Anordnung. Ein erstes Sende- und Empfangssystem 1 ist über einen einzigen Zweileitungskanal, der Leitungsabschnitte 6a, 6b bzw. 7a, 7b bzw. 8a, 8b umfasst, mit einem Trenntransformator oder Trennwandler 3 verbünden, der Teil eines Gleichstromübertragers 4 ist. Dieser ist wiederum über einen elektronischen I/I- oder I/U-Wandler 5 mit einem zweiten Sende- und Empfangssystem 2 verbunden. Der Trennwandler 3 weist eine primärseitige Wicklung 31 und eine sekundärseitige Wicklung 32 auf. Diese primär- bzw. sekundärseitigen Wicklungen 31 und 32 definieren eine Primärseite 45 (= Primärkreis) und eine Sekundärseite 46 (= Sekundärkreis) des Gleichstromübertragers 4. In der Primärseite 45 des Gleichstromübertragers 4 werden anliegende analoge Gleichstromsignale zerhackt, die zerhackten Signale mittels des Trennwandlers 3 auf die Sekundärseite 46 übertragen und von dieser wieder in analoge Gleichstromsignale umgewandelt. Nähere Einzelheiten hierzu werden anhand der Fig. 6 bis 10 erläutert.

Mit der Primärseite 45 und der Sekundärseite 46 können für die gesamte Anordnung zwischen erstem und zweitem Sende- und Empfangssystem zwei Bereiche A und B unterschieden werden, die beispielsweise für Ex- und Nicht-Ex-Bereich stehen. Da zwischen Primärseite 45 und Sekundärseite 46 keine leitende Verbindung besteht, sind die beiden Seiten galvanisch voneinander getrennt.

Die Sekundärseite 46 des Gleichstromübertragers 4 ist über den zweiten Abschnitt des Zweileitungskanals, d.h. über das Verbindungsleitungspaar 7a und 7b, mit der Eingangsseite des elektronischen I/I- oder I/U-Wandlers 5 verbunden. Die Ausgangsseite des elektronischen I/I- oder I/U-Wandlers 5 ist mittels des dritten Abschnitts des Zweileitungskanals, der ein Ausgangsleitungspaar 8a und 8b enthält, mit dem zweiten Sende- und Empfangssystem 2 verbunden. Ferner ist ein Meldesignalgeber 9 an dem elektronische I/I- oder I/U-Wandler 5 angeschlossen. Der Meldesignalgeber 9 kann sowohl Gleichspannungssignale als auch Wechselspannungssignale ausgeben. Um z.B. Schaltzustände eines Schalters zu melden, können Gleichspannungssignale unterschiedlichen Potentials (z.B. von 0 Volt und 0,5 Volt) generiert werden. Als Wechselspannungssignale können FSK-Signale (Frequency Shift Keying) benutzt werden, beispielsweise solche nach dem HART-Protokoll.

Das erste Sende- und Empfangssystem 1 führt dem Gleichstromübertrager 4 über das Eingangsleitungspaar 6a, 6b das analoge Primärstromsignal zu. Bei diesem Primärstromsignal kann es sich um ein Normstromsignal I_{N1} im Bereich von 0 bis 20 mA bzw. 4 bis 20 mA) handeln, wie es in der DIN IEC 60 381 Teil 1 definiert ist. Diese Normstromsignale können über große Entfernungen übertragen werden. Ein Messsignal hinsichtlich Temperatur kann z.B. für einen Temperaturbereich von 0 bis 100°C auf ein Normstromsignal von 0 bis 20 mA abgebildet werden. Ein Stromwert von 10 A entspricht dann einer Temperatur von 50°C. Bei der Signalrichtung für Messsignale vom System 1 aus wird die Sekundärseite des Gleichstromübertragers 4 im Kurzschluss betrieben. Dies bedeutet, dass die Sekundärspannung gleich Null ist, so dass praktisch keine Leistung übertragen wird. Der sekundärseitig fließende Strom I_{N2} ist proportional zum Primärstrom I_{N1} und zum Übersetzungsverhältnis von Primärwicklung 31 zu Sekundärwicklung 32. Sind die Wicklungszahlen dieser Wicklungen 31, 32 gleich, so ist der Primärstrom I_{N1} gleich dem Sekundärstrom I_{N2}, jedoch sind die Stromrichtungen entgegengesetzt. Signalrichtung und Stromrichtung stimmen somit nicht überein. Würde der Gleichstromübertrager 4 das zweite Sende- und Empfangssystem selbst treiben, würde er nicht mehr im Kurzschluss betrieben, was zur Folge hätte, dass bei zu großer Leistungsübertragung der lineare Stromübertragungsbereich verlassen würde.

Zur Entkopplung des Gleichstromübertragers 4 von dem zweiten Sende- und Empfangssystem 2 wird der elektronische I/I- oder I/U-Wandler 5 verwendet, der als Operationsverstärkeranordnung ausgebildet ist. Diese Operationsverstärkeranordnung 5 sorgt durch ihre Beschaltung als invertierender Verstärker dafür, dass der Anschluss mit der Rückführung durch den Regelvorgang auf virtuelle Masse gelangt, womit die beiden Eingänge P und N auf gleiches Potential kommen, so dass der sekundärseitige Kurzschluss des Gleichstromwübersetzers 4 sichergestellt ist. Es handelt sich hierbei um einen sog. virtuellen Kurzschluss. Der Meldesignalgeber 9 ist dabei als kurzgeschlossen zu betrachten. Seine Spannung U₂ ist gleich Null.

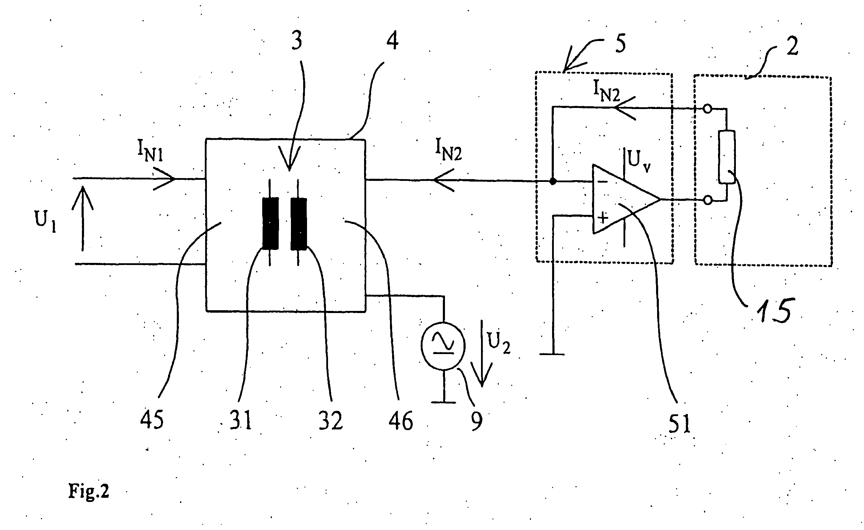

Dies wird in Fig. 2 verdeutlicht. Die Operationsverstärkeranordnung 5 umfasst einen Operationsverstärker 51 mit einem P-Eingang, einem N-Eingang und einem Ausgang. Der Operationsverstärker 51 ist an seinem P-Eingang mit Massepotential verbunden, sein N-Eingang ist an die Sekundärseite 46 des Gleichstromübertragrs 4 angeschlossen. Der Ausgang ist über das zweite Sende- und Empfangssystem 2 auf den N-Eingang rückgeführt. Der Operationsverstärker 51 der Operationsverstärkeranordnung 5 wird mit der Spannung Uᵥ versorgt. Sowohl der Fußpunkt des Gleichstromübertragers 4 als auch der P-Eingang des Operationsverstärkers 51 der Operationsverstärkeranordnung 5 liegen auf gleichem Potential, da sie beide mit Massepotential verbunden sind. Auch hier ist der Meldesignalgeber 9 als kurzgeschlossen zu betrachten. In Verbindung mit dem virtuellen Kurzschluss des Operationsverstärkers 51 wird der Gleichstromübetrager 4 im Kurzschluss betrieben. Durch die Hochohmigkeit der Operationsverstärkereingänge ist gewährleistet, dass der Strom durch das zweite Sende- und Empfangssystem 2 exakt gleich dem Sekundärstrom I_{N2} des Gleichstromübertragers 4 ist. Der durch das zweite Sende- und Empfangssystem 2 fließende Strom wird vom Operationsverstärker 51 geliefert. Die Energie hierfür erhält der Operationsverstärker 51 von seiner Versorgungsspannung Uᵥ.

Um die Übertragung eines Signals entgegen der Signalrichtung des Normstromsignals I_{N1} zu ermöglichen, wird der Meldesignalgeber 9, der eine gesteuerte Spannungsquelle mit der Spannung U₂ darstellt, im Sekundärkreis 46 des Gleichstromübertragers 4 in Reihe eingeschaltet. Der Meldesignalgeber 9 als Spannungsquelle hebt den Kurzschlüss des Gleichstromübertragers 4 im Sekundärkreis 46 auf, nicht jedoch den virtuellen Kurzschluss des Operationsverstärkers 51. Jedoch kann das Normstromsignal I_{N1} nicht mehr mit seinem ursprünglichen Wert weiter fließen. Soll dieses Signal trotz der sekundärseitig eingespeisten Spannung U₂ weiterhin fließen, so muss primärseitig das als Eingangsstromquelle dienende erste Sende- und Empfangssystem 1 seine Spannung U₁ um genau den Wert erhöhen, der dem Wert der sekundärseitig eingespeisten Spannung U₂ entspricht. Indem diese Spannungserhöhung durchgeführt wird, wird im Ergebnis die sekundärseitig eingespeiste Spannung U₂ auf der Primärseite 45 messbar. Die Signalübertragung des Meldesignals erfolgt somit mit der Messung der Spannungserhöhung auf der Primärseite.

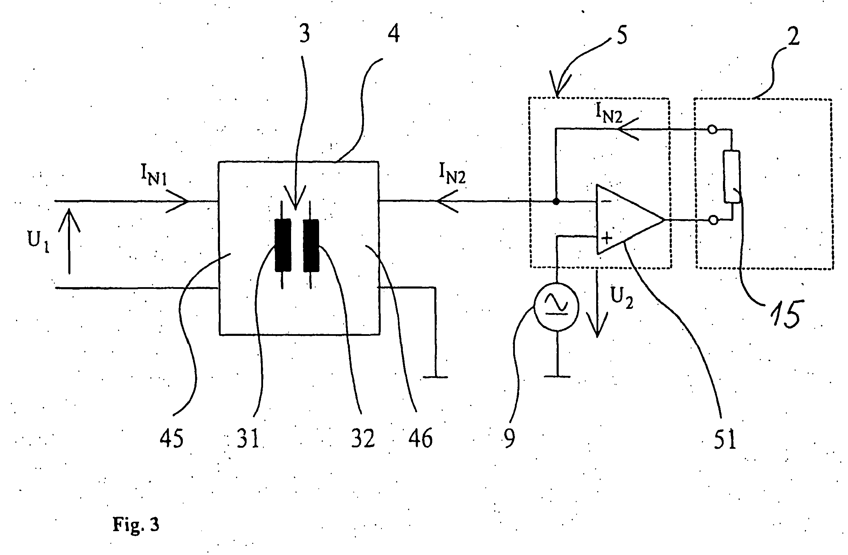

Fig. 3 zeigt in einem zweiten Ausführungsbeispiel eine weitere Möglichkeit zur Übertragung der sekundärseitig eingespeisten Spannung U₂ in den Primärkreis 45. Die als Meldesignalgeber 9 dienende gesteuerte Spannungsquelle wird in diesem Ausführungsbeispiel an den hochohmigen Eingang des Operationsverstärkers 51, der in Fig. 2 Masseanschluss war, angeschlossen. Durch dieses Einschalten wird der sekundärseitige Kurzschluss des Gleichstromübertragers 4 aufgehoben, da die Spannungsquelle 9 wirkungsmäßig in Reihe mit dem Ausgang des Gleichstromübertragers 46 liegt. Daher muss die Primärspannung U₁ um den Wert der sekundärseitig eingespeisten Spannung U₂ erhöht werden, damit das Normstromsignal I_{N1} weiterhin fließen kann. Das Meldesignal wird auf diese Weise auf der Primärseite messbar und in der beschriebenen Weise bestimmt.

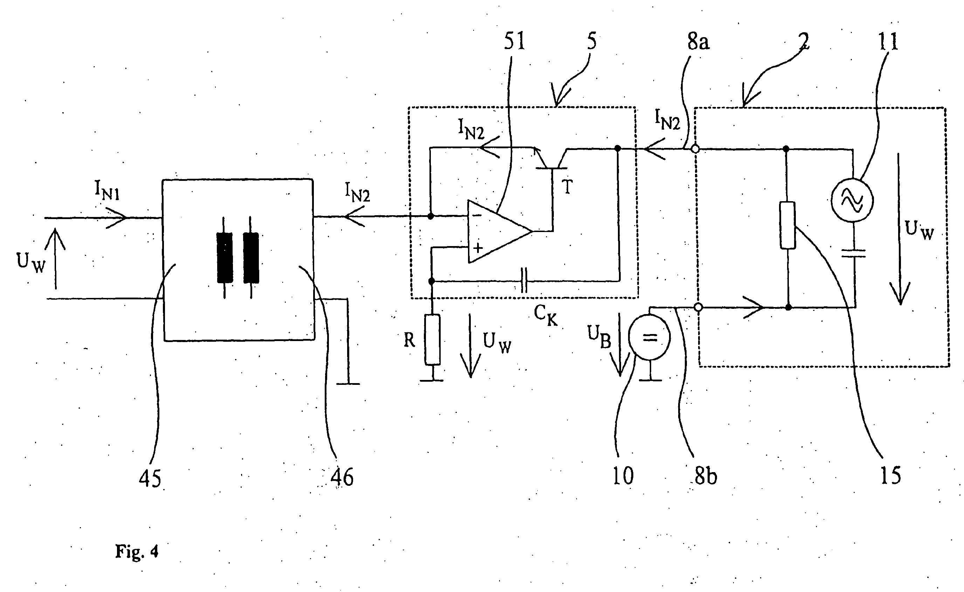

Fig. 4 zeigt ein Ausführungsbeispiel der erfindungsgemäßen Anordnung, bei der der P-Eingang des Operationsverstärkers 51 der Operationsverstärkeranordnung 5 über einen Widerstand R mit Massepotential verbunden ist. Der N-Eingang liegt an der Sekundärseiteseite 46 des Gleichstromübertragers 4. Im Ausgang des Operationsverstärkers 51 liegt ein Transistor T zur Verstärkung des Ausgangssignals des Operationsverstärkers 51 und zur Rückführung dieses Ausgangssignals auf den N-Eingang.

Besonders vorteilhaft ist diese Anordnung für die galvanisch getrennte Übertragung eines Wechselspannungssignals U_{w} eines Wechselspannungssignalgebers 11 von dem zweiten Sende- und Empfangssystem 2 aus, das als Feldgerät mit einer Bürde 15 ausgestaltet sein kann. Dabei bildet das Ausgangsleitungspaar 8a, 8b den über das Feld laufenden Zweileitungskanal. Das Wechselspannungssignal U_{w} wird auf das Normstromsignal I_{N2} aufmoduliert, um Prozessdaten entgegengesetzt zur Signalrichtung des Normstromsignals I_{N1} zu übertragen. Das Wechselspannungssignal U_{w} wird aus der Ausgangsleitung 8a mittels eines Kondensator Cₖ ausgekoppelt und liegt unter Berücksichtigung, dass die Betriebsspannung U_{B} einer Betriebsspannungsquelle 10 für Wechselspannung als Kurzschluss zu betrachten ist, über den Widerstand R am hochohmigen Eingang des Operationsverstärkers 51 an, der mit Masse verbunden ist. Somit liegt das Wechselspannungssignal U_{w} über den virtuellen Kurzschluss des Operationsverstärkers 51 in Reihe mit dem Ausgang des Gleichstromübertragers 4 und wird auf die Primärseite 45 des Gleichstromübertragers 4 übertragen und dort messbar. Die Messung ist gleichbedeutend mit der Signalbestimmung. Somit wird indirekt ein Signal vom System 2 auf System 1 übertragen.

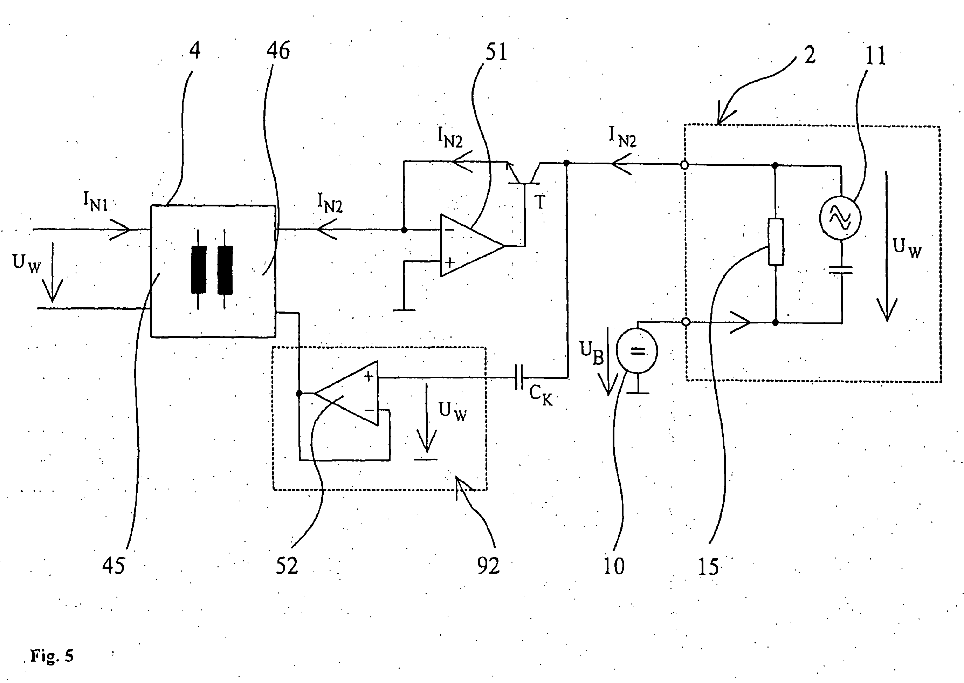

Fig. 5 zeigt eine im Prinzip gleiche Anordnung wie Fig. 4, allerdings mit dem Unterschied, dass die Einspeisung des Wechselspannungssignals U_{w} am Fusspunkt des Sekundärkreises 46 des Gleichstromübertragers 4 mittels eines Operationsverstärkers 52 erfolgt, der als niederohmige Spannungsquelle 92 betrieben wird.

Die Fig. 6 bis Fig. 10 zeigen verschiedene Ausführungsformen des Gleichstromübertrageranordnung 4, wie sie in die Schaltungsanordnung der Erfindung eingefügt sind.

Fig. 6 zeigt den Gleichstromübertrager 4 als Halbbrückenstromwandler mit aktiven Schaltern 35, 36. Hierbei sorgen ein primärseitiger Taktgeber 43 und ein sekundärseitiger Taktgeber 44 dafür, dass der primärseitige Schalter 35 und der sekundärseitige Schalter 36 zwischen den Adern des Eingangsleitungspaars 6a, 6b bzw. des Verbindungsleitungspaars 7a, 7b synchron hin- und hergeschaltet werden. Die Frequenz der Umschaltung (etwa 100 - 200 kHz) ist an die Induktivität der Wicklungen 31, 32 und die Kapazität der Kondensatoren 33a, 33b, 34a, 34b angepasst. Auf der Primärseite 45 ändert das Normstromsignal I_{N1}, welches ein analoges Gleichstromsignal ist, abhängig von dem durch den primärseitigen Taktgeber 43 vorgegebenen Takt, die Stromrichtung. Zur Bildung eines geeigneten Wechselstromsignals, das über den Trenntransformator oder Trennwandler 3 übertragen werden kann, sind auf der Primärseite 45 zwei Kondensatoren 33a und 33b vorgesehen, die abwechselnd beaufschlagt werden. Entsprechendes geschieht auf der Sekundärseite 46 mittels zweier Kondensatoren 34a und 34b und der synchronen Umschaltung der Adern des Verbindungsleitungspaares 7a, 7b, zu den Zuleitungen 7a1, 7b1 der Wicklung 32. Somit wird, symmetrisch zu dem Normstromsignal I_{N1}, auf der Primärseite ein Normstromsignal I_{N2} auf der Sekundärseite erzeugt, deren Stromrichtungen umgekehrt sind.

Bei dieser Ausführungsform der Fig. 6 wird das Wechselspannungssignal U_{W} des Meldesignalgebers 9 am Fußpunkt der Sekundärseite 46 des Gleichstromübertragers 4 eingespeist.

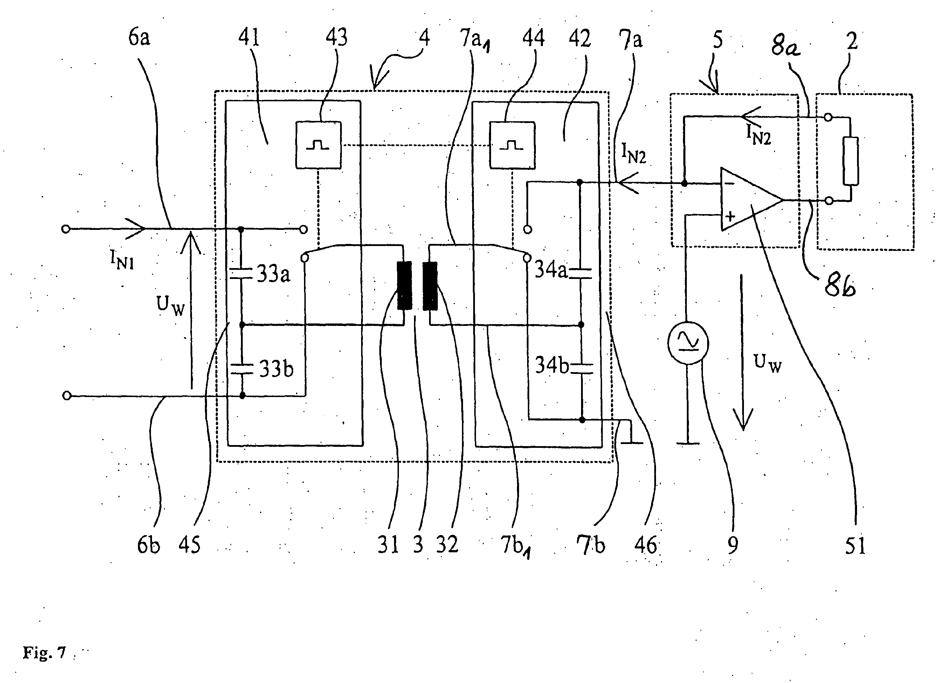

Fig. 7 zeigt den Gleichstromübertrager 4 als Halbbrückenstromwandler mit aktiven Schaltern in der gleichen Ausführungsform wie in Fig. 6. Der Unterschied zwischen Fig. 7 und Fig. 6 besteht darin, dass in Fig. 7 die Einspeisung des Wechselspannungssignals U_{W} des Meldesignalgebers 9 am P-Eingang des Operationsverstärkers 51 erfolgt, wie dies mit Fig. 3 beschrieben ist.

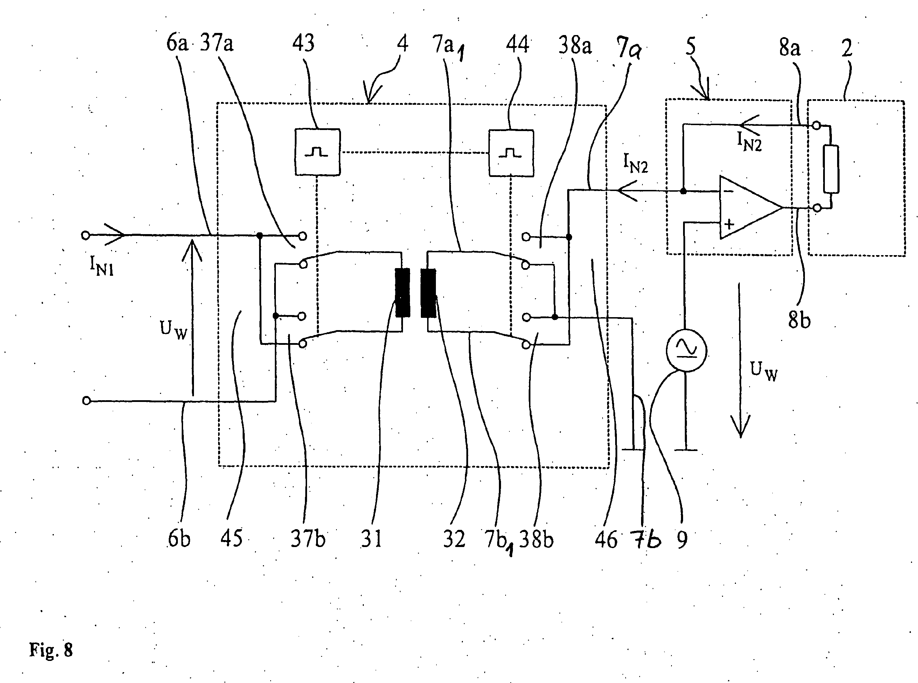

Fig. 8 zeigt den Gleichstromübertrager 4 als Vollbrückenstromwandler mit aktiven Schaltern 37a, 37b, 38a, 38b. Hierbei schaltet ein primärseitiger Taktgeber 43 beiden primärseitigen Schalter 37a und 37b zwischen zwei Positionen zur Verbindung der Leitungsadern 6a, 6b mit wechselnden Anschlüssen der Wicklung 31 und der Leitungsadern 7a, 7b mit wechselnden Anschlüssen der Wiclung 32. Der zyklische Positionswechsel der beiden primärseitigen Schalter 37a und 37b wandelt das eingehende Gleichstromsignal I_{N1} in ein Impulssignal oder Wechselstromsignal um. Synchron zum primärseitigen Taktgeber 43 schaltet ein sekundärseitiger Taktgeber 44 die beiden sekundärseitigenSchalter 38a und 38b ebenfalls zwischen zwei Positionen. Der zyklische Positionswechsel der beiden sekundärseitigen Schalter 38a und 38b wandelt das auf der Sekundärseite 46 eingehende Impulssignal oder Wechselstromsignal in ein Gleichstromsignal I_{N2} um.

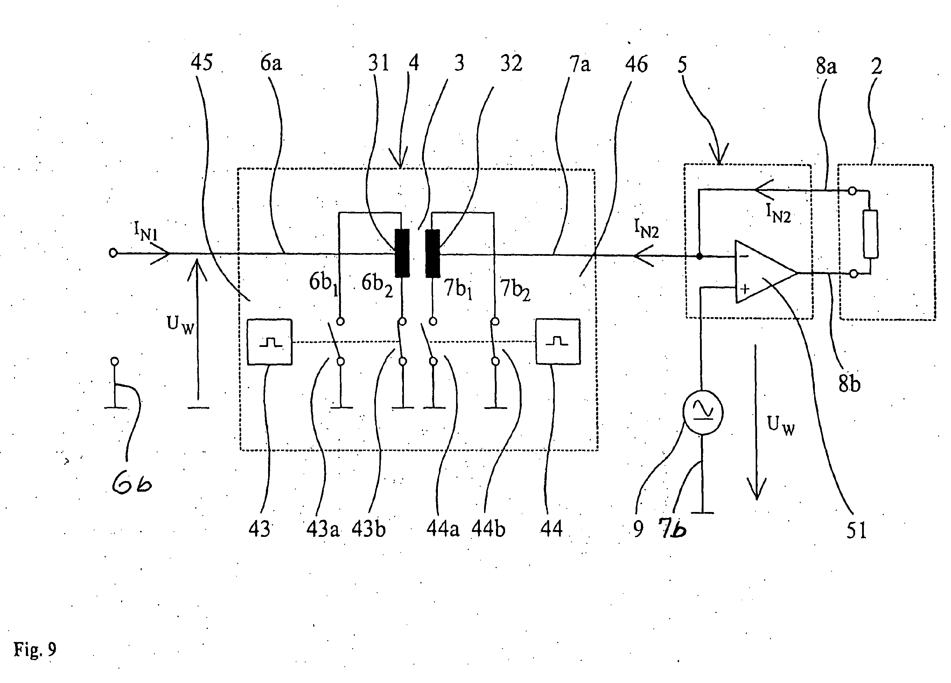

Fig. 9 zeigt den Gleichstromübertrager 4 in der Bauform mit Mittelanzapfung. Hierbei schaltet ein primärseitiger Taktgeber 43 zwei primärseitige Schalter 43a und 43b abwechselnd an die Anschlussleitungen 6b₁ und 6b₂. Der zyklische Positionswechsel der beiden primärseitigen Schalter 43a und 43b wandelt das eingehende Gleichstromsignal I_{N1} in ein Impulssignal oder Wechselstromsignal um. Synchron zum primärseitigen Taktgeber 43 schaltet ein sekundärseitiger Taktgeber 44 zwei sekundärseitige Schalter 44a und 44b abwechselnd an die Anschlussleitungen 7b₁ und 7b₂. Der zyklische Positionswechsel der beiden sekundärseitigen Schalter 44a und 44b wandelt das auf der Sekundärseite 46 eingehende Impuls- oder Wechselstromsignal in ein Gleichstromsignal I_{N2} um.

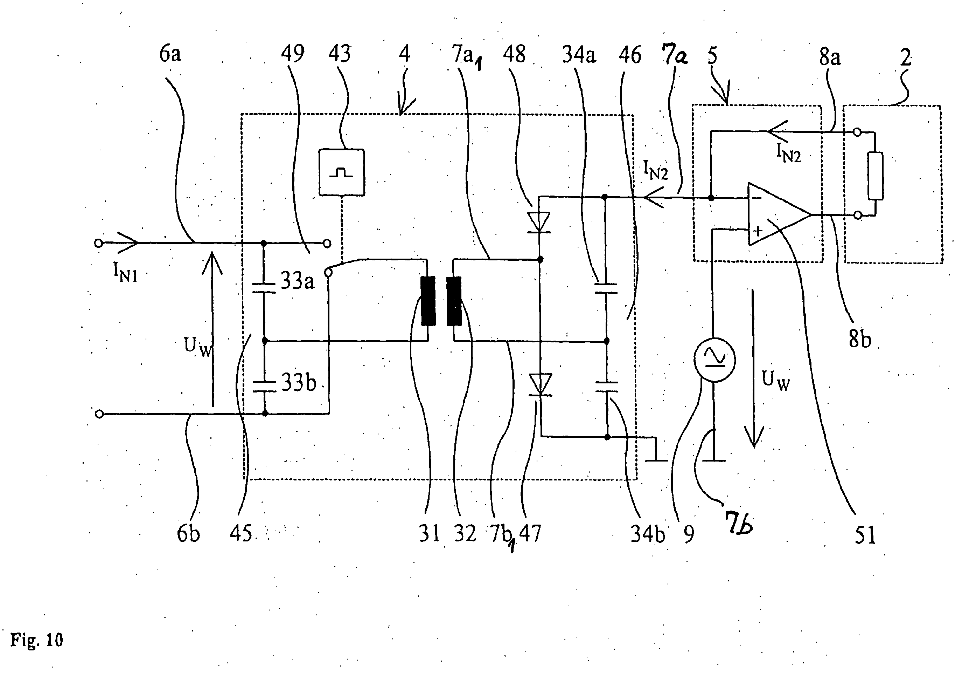

Fig. 10 zeigt den Stromwandler 4 als Halbbrückenstromwandler mit Dioden 47, 48. Primärseitig wird das Gleichstromsignal I_{N1} in der bereits in Fig. 6 und Fig. 7 dargestellten Weise in ein Impulssignal oder Wechselstromsignal umgewandelt. Sekundärseitig wird das eintreffende Impulssignal oder Wechselstromsignal mittels der Dioden 47 und 48 und zweier Kondensatoren 34a und 34b in ein Gleichstromsignal I_{N2} umgewandelt.

Ein möglicher Anwendungsfall für die vorstehend beschriebenen Anordnungen besteht darin, dass das erste Sende- und Empfangssystem 1 beispielsweise ein Speicherprogrammiertes System SPS ist, das das Normstromsignal I_{N1} erzeugt. Dieses Normstromsignal I_{N1} führt auf der Sekundärseite 46 dazu, dass ein Aktor (= Bürde 15 als Teil eines Feldgerätes) seinen Zustand ändert. Dieser Aktor kann z.B. ein Ventil sein, das in Abhängigkeit von dem Normstromsignal I_{N1} seinen Zustand ändert. Über das Rücksignal kann das Ventil den Ist-Zustand der Ventilstellung auf die Primärseite 45 zurückmelden. Sekundärseitig könnte aber auch eine komplexe Elektronik wie beispielsweise ein Busteilnehmer das zweite Sende- und Empfangssystem 2 darstellen.

Ein weiterer möglicher Anwendungsfall für die erfindungsgemäße Anordnung besteht darin, dass auf der Primärseite 45 das erste Sende- und Empfangssystem 1 einen Temperatursensor beinhaltet, der das Normstromsignal I_{N1} erzeugt. Das zweite Sende- und Empfangssystem 2 ist dann beispielsweise eine Auswerteschaltung. Auf diese Weise kann eine vom Sensor gemessene Temperatur angezeigt und/oder für Steueurungsaufgaben verwendet werden. Über das Rücksignal kann der Sensor parametriert werden.

Allgemein kann das erste Sende- und Empfangssystem 1 und/oder das zweite Sende- und Empfangssystem 2 als Feldgerät ausgebildet sein, wonach der Leitungsabschnitt 6a, 6b und/oder 8a, 8b die über Feld laufende Übertragungsstrecke darstellt, die die Signale in beide Richtungen übermitteln kann. Der Gleichstromübertrager 4 und die Operationsverstärkeranordnung 5 können in diesem Zusammenhang als "Zentrale" betrachtet werden. Diese Zentrale weist nur wenig Baugruppen auf und kann auf kleinem Raum untergebracht werden, wie es erwünscht ist.

## Patentansprüche

1. Anordnung zur potentialgetrennten Übertragung von Signalen zwischen einem ersten Sende- und Empfangssystem (1) und einem zweiten Sende- und Empfangssystem (2), umfassend:
Abschnitte von Sende- und Empfangsleitungspaaren (6a, 6b; 7a, 7b; 8a, 8b), welche die beiden Sende- und Empfangssysteme (1, 2) über einen einzigen Zweileitungskanal verbinden;
einen Trennwandler (3) zwischen zwei benachbarten Sende- und Empfangsleitungspaaren (6a, 6b; 7a, 7b);
einen Meldesignalgeber (9), der sekundärseitig an den Trennwandler (3) angeschlossen wird, so dass primärseitig ein Meldesignal (U₂) auswertbar ist,
**dadurch gekennzeichnet,**
**dass** der Trennwandler (3) in einen Gleichstromübertrager (4) einbezogen ist, dessen Primärkreis (45) vom ersten System (1) Gleichstromsignale (I_{N1}) zuführbar sind, die in Wechselstromsignale und im Sekundärkreis (46) zurück in Gleichstromsignale (I_{N2}) gewandelt werden, wobei der Gleichstromübertrager (4) für die Signalübertragung vom ersten System (1) zum zweiten System (2) im Kurzschluss betrieben wird; und
**dass** in einen Abschnitt (8a, 8b) der Sende- und Empfangsleitungspaare ein elektronischer I/I- oder I/U-Wandler (5) einbezogen ist, an dessen Eingangsseite die Signale des Sekundärkreises (46) anliegen und an dessen Ausgangsseite Nutzsignale als Strom- oder Spannungssignale an das zweite System (2) abgegeben werden.

2. Anordnung nach Anspruch 1, **dadurch gekennzeichnet, dass** der Meldesignalgeber (9) eine gesteuerte Spannungsquelle in Reihe mit dem Sekundärkreis (46) des Gleichstromübertragers (4) darstellt, und dass das erste Sende- und Empfangssystem (1) ein Normstromsignal (I_{N1}) dem Primärkreis (45) des Gleichstromübertragers (4) zuführt und bei Eintreffen einer Spannungsänderung infolge eines Meldesignals die Einspeisespannung (U₁) um einen solchen Wert erhöht, wie es dem Wert (U₂) der sekundärseitig eingespeisten Spannung des Meldesignalgebers (9) entspricht, um aus der gemessenen Einspeisespannung an dem Primärkreis (45) den Wert des Meldesignals zu ermitteln.

3. Anordnung nach Anspruch 1 oder 2, **dadurch gekennzeichnet, dass** der Meldesignalgeber (9) an einem ersten Eingang eines Operationsverstärkers (51) des elektronischen I/I- oder I/U-Wandlers (5) angeschlossen ist, an dessen anderem zweiten Eingang der Sekundärkreis (46) des Gleichstromübertragers (4) anliegt, und dass der Ausgang des Operationsverstärkers (51) auf dem zweiten Eingang des Operationsverstärkers (51) rückgeführt ist.

4. Anordnung nach einem der Ansprüche 1-3, **dadurch gekennzeichnet, dass** das zweite Sende- und Empfangssystem (2) eine Wechselspannungssignalquelle (11) aufweist, deren Wechselspannungssignal (U_{w}) auf das empfangene Gleichstromsignal (I_{N2}) aufmoduliert wird, und zwar über einen Kondensator (C_{K}) auf einen Widerstand (R) im Eingang des I/I- oder I/U-Wandlers (5) gekoppelt wird, wobei das Wechselspannungssignal den direkten Massebezug des elektronischen I/I- oder I/U-Wandlers (5) aufhebt und der elektronische I/I- oder I/U-Wandler (5) durch seine Regeleigenschaften das Wechselspannungssignal (U_{w}) auf den sekundärseitigen Strom (I_{N2}) des Normstromsignals (I_{N1}) aufmoduliert und das erste Sende- und Empfangssystem (1) somit gezwungen wird, die gleiche Spannung als Einspeisespannung (U₁) zur Verfügung zu stellen.

5. Anordnung nach Anspruch 3, **dadurch gekennzeichnet, dass** der Meldesignalgeber (9) durch eine niederohmige Spannungsquelle (92) gebildet wird, die einerseits an der Sekundärseite (46) des Gleichstromübertragers (4) angeschlossen ist und andererseits über einen Kondensator (C_{K}) an ein Feldgerät mit einer Bürde (15) und einem Wechselspannungssignalgeber (11) angeschlossen ist, wobei das Meldesignal, als Wechselspannungssignal auf den sekundärseitigen Strom (I_{N2}) des Normstromsignals (I_{N1}) aufmoduliert, zum ersten Sende- und Empfangssystem (1) übertragen wird.

6. Anordnung nach einem der Ansprüche 1 - 5, **dadurch gekennzeichnet, dass** die Anschlussleitungen der Primärseite (45) des Trennwandlers (3) und die Anschlussleitungen der Sekundärseite (46) des Trennwandlers (3) zur Bildung eines Halbbrückenstromwandlers synchron umschaltbar sind.

7. Anordnung nach Anspruch 6 **dadurch gekennzeichnet, dass** zur Umschaltung im Primärkreis (45) aktive Schalter (35, 37a, 37b, 43a, 43b) und im Sekundärkreis (46) entweder aktive Schalter (36, 38a, 38b, 44a, 44b) oder Dioden (47, 48) vorgesehen sind.

8. Anordnung nach einem der Ansprüche 1 - 5, **dadurch gekennzeichnet, dass** die Anschlussleitungen der Primärseite (45) des Trennwandlers (3) und die Anschlussleitungen der Sekundärseite (46) des Trennwanders (3) zur Bildung eines Vollbrückenstromwandlers mit aktiven Schaltern (37a, 37b; 38a, 38b) synchron umschaltbar sind.

9. Anordnung nach einem der Ansprüche 1 - 5, **dadurch gekennzeichnet, dass** der Trennwandler (3) in seiner Primärseite (45) und seiner Sekundärseite (46) mittenangezapft ist, und dass die Anschlussleitungen (6b₁, 6b₂; 7b₁, 7b₂) des Trennwandlers (3) synchron umschaltbar sind.

10. Verfahren zur potentialgetrennten Übertragung von Gleich- und Wechselstromsignalen zwischen einem ersten Sende- und Empfangssystem (1) und einem zweiten Sende- und Empfangssystem (2) mit folgenden Schritten:
a) in dem ersten Sende- und Empfangssystem (1) werden Messsignale gewonnen, die zur Übertragung über einen Zweileitungskanal, der galvanisch voneinander getrennte Abschnitte aufweist, als Gleich- und Wechselstromsignale aufbereitet werden;
b) die Gleich- und Wechselstromsignale werden unter Benutzung eines Gleichstromübertragers (4) mit Trennwandler (3) über den Zweileitungskanal einem elektronischen I/I- oder I/U-Wandler (5) zugeführt;
c) der elektronische I/I- oder I/U-Wandler (5) gewinnt aus den Gleich- und Wechselstromsignalen ein dem Messsignal korrespondierendes Strom- oder Spannungssignal zurück und stellt es dem zweiten Sende- und Empfangssystem (2) zur Verfügung;
d) im Falle der Übertragung eines Meldesignals an das erste Sende- und Empfangssystem (1) vom zweiten Sende- und Empfangssystem (2) aus wird das Meldesignal dem Sekundärkreis (46) des Gleichstromübertragers (4) zugeführt und über den Primärkreis (45) dem ersten Sende- und Empfangssystem (1) zugeleitet.

11. Verfahren nach Anspruch 10, **dadurch gekennzeichnet, dass** die Messsignale Gleichstromsignale eines Messsignalgebers darstellen und zur Übertragung über den Trennwandler (3) zerhackt werden.

12. Verfahren nach Anspruch 11, **dadurch gekennzeichnet, dass** die Gleichstrommesssignale Normsignale (I_{N1}) mit jeweils vorgegebenen Stromstärken darstellen.

13. Verfahren nach Anspruch 10 oder 11, **dadurch gekennzeichnet, dass** die Meldesignale auf der Sekundärseite (46) eingespeiste Spannungssignale (U₂) darstellen, die auf der Primärseite (45) durch Kompensation der Spannungsänderung an der Primärseite (45) nachweisbar sind.

14. Verfahren nach einem der Ansprüche 10 bis 13, **dadurch gekennzeichnet, dass** das erste Sende- und Empfangssystem (1) ein Speicher-programmierbares System darstellt und dass das zweite Sende- und Empfangssystem (2) eine gesteuerte Einrichtung beinhaltet, die aufgrund des Messsignals reagiert und gegebenenfalls die Rücksendung eines Meldesignals veranlasst.

15. Verfahren nach Anspruch 14 **dadurch gekennzeichnet, dass** die gesteuerte Einrichtung einen Aktor darstellt, der in Abhängigkeit von dem Messsignal seinen Zustand oder seine Stellung ändert.

16. Verfahren nach Anspruch 14 **dadurch gekennzeichnet, dass** die gesteuerte Einrichtung ein Busteilnehmer darstellt.

17. Verfahren nach Anspruch 14 **dadurch gekennzeichnet, dass** die gesteuerte Einrichtung eine Auswerteschaltung darstellt.

18. Verfahren nach einem der Ansprüche 10 bis 17 **dadurch gekennzeichnet, dass** das erste Sende- und Empfangssystem (1) eine Sensoreinrichtung darstellt.

## Claims

1. Arrangement for the electrically isolated transmission of signals between a first transmit-and-receive system (1) and a second transmit-and-receive system (2), comprising:
sections of transmit-and-receive conductor pairs (6a, 6b; 7a, 7b; 8a, 8b) which connect the two transmit-and-receive systems (1, 2) via a single two-conductor channel;
an isolating converter (3) between two adjacent transmit-and-receive conductor pairs (6a, 6b; 7a, 7b);
a status signal transmitter (9) which is connected on the secondary side to the isolating converter (3), so that on the primary side a status signal (U₂) can be evaluated,
**characterised in that**
the isolating converter (3) is incorporated into a direct-current transmitter (4), whose primary circuit (45) can be fed with direct-current signals (I_{N1}) from the first system (1), which direct-current signals are converted into alternating-current signals and are converted back into direct-current signals (I_{N2}) in the secondary circuit (46), wherein the direct-current transmitter (4) is operated in short-circuit for the signal transmission from the first system (1) to the second system (2); and
that incorporated into a section (8a, 8b) of the transmit-and-receive conductor pairs is an electronic I/I or I/U converter (5), on whose input side the signals of the secondary circuit (46) are applied and on whose output side useful signals are output as current or voltage signals to the second system (2).

2. Arrangement as claimed in claim 1, **characterised in that** the status signal transmitter (9) represents a controlled voltage source in series with the secondary circuit (46) of the direct-current transmitter (4), and **in that** the first transmit-and-receive system (1) feeds a standard current signal (I_{N1}) to the primary circuit (45) of the direct-current transmitter (4) and, when a change in voltage occurs as a result of a status signal, increases the supply voltage (U₁) by a value corresponding to the value (U₂) of the voltage of the status signal transmitter (9) supplied on the secondary side, in order to determine the value of the status signal from the measured supply voltage at the primary circuit (45).

3. Arrangement as claimed in claim 1 or 2, **characterised in that** the status signal transmitter (9) is connected to a first input of an operational amplifier (51) of the electronic I/I or I/U converter (5), whose other second input is connected to the secondary circuit (46) of the direct-current transmitter (4), and that the output of the operational amplifier (51) is fed back to the second input of the operational amplifier (51).

4. Arrangement as claimed in any one of claims 1-3, **characterised in that** the second transmit-and-receive system (2) has an alternating-current voltage signal source (11), whose alternating-current voltage signal (U_{w}) is modulated to the received direct-current signal (I_{N2}), and in particular is coupled via a capacitor (C_{K}) to a resistor (R) in the input of the I/I or I/U converter (5), wherein the alternating-current voltage signal cancels the direct ground reference of the electronic I/I or I/U converter (5) and, by reason of its control properties, the electronic I/I or I/U converter (5) modulates the alternating-current voltage signal (U_{w}) to the secondary-side current (I_{N2}) of the standard current signal (I_{N1}) and the first transmit-and-receive system (I) is thus compelled to make the same voltage available as a supply voltage (U₁).

5. Arrangement as claimed in claim 3, **characterised in that** the status signal transmitter (9) is formed by a low-impedance voltage source (92), which on the one hand is connected to the secondary side (46) of the direct-current transmitter (4) and on the other hand is connected via a capacitor (C_{K}) to a field device with an apparent ohmic resistance (15) and an alternating-current voltage signal transmitter (11), wherein the status signal, modulated as an alternating-current voltage signal to the secondary-side current (I_{N2}) of the standard current signal (I_{N1}), is transmitted to the first transmit-and-receive system (1).

6. Arrangement as claimed in any one of claims 1-5, **characterised in that** the connection conductors of the primary side (45) of the isolating converter (3) and the connection conductors of the secondary side (46) of the isolating converter (3) can be switched in sync for forming a half-bridge current converter.

7. Arrangement as claimed in claim 6, **characterised in that** for switching in the primary circuit (45), active switches (35, 37a, 37b, 43a, 43b) are provided and in the secondary circuit (46) either active switches (36, 38a, 38b, 44a, 44b) or diodes (47, 48) are provided.

8. Arrangement as claimed in any one of claims 1-5, **characterised in that** the connection conductors of the primary side (45) of the isolating converter (3) and the connection conductors of the secondary side (46) of the isolating converter (3) can be switched in sync for forming a full-bridge current converter with active switches (37a, 37b; 38a, 38b).

9. Arrangement as claimed in any one of claims 1-5, **characterised in that** the isolating converter (3) is centre-tapped in its primary side (45) and its secondary side (46), and that the connection conductors (6b₁, 6b₂; 7b₁, 7b₂ of the isolating converter (3) can be switched in sync.

10. Method for the electrically isolated transmission of direct-current and alternating-current signals between a first transmit-and-receive system (1) and a second transmit-and-receive system (2), comprising the steps of:
a) in the first transmit-and-receive system (1) measurement signals are obtained which are processed as direct-current or alternating-current signals for transmission via a two-conductor channel which has sections which are DC-isolated from each other;
b) the direct-current and alternating-current signals are fed to an electronic I/I or I/U converter (5) via the two-conductor channel using a direct-current transmitter (4) with an isolating converter (3);
c) the electronic I/I or I/U converter (5) recovers a current or voltage signal, corresponding to the measurement signal, from the direct-current and alternating-current signals and makes the current or voltage signal available to the second transmit-and-receive system (2);
d) in the event of transmission of a status signal to the first transmit-and-receive system (1) from the second transmit-and-receive system (2), the status signal is fed to the secondary circuit (46) of the direct-current transmitter (4) and is supplied via the primary circuit (45) to the first transmit-and-receive system (1).

11. Method as claimed in claim 10, **characterised in that** the measurement signals represent direct-current signals of a measurement signal transmitter and are chopped for transmission via the isolating converter (3).

12. Method as claimed in claim 11, **characterised in that** the direct-current measurement signals represent standard signals (I_{N1}) each with specified current intensities.

13. Method as claimed in claim 10 or 11, **characterised in that** the status signals represent voltage signals (U₂) which are supplied on the secondary side (46) and which can be detected on the primary side (45) by compensation of the change in voltage on the primary side (45).

14. Method as claimed in any one of claims 10 to 13, **characterised in that** the first transmit-and-receive system (1) represents a memory-programmable system and that the second transmit-and-receive system (2) includes a controlled device which reacts by reason of the measurement signal and which optionally triggers the return-transmission of a status signal.

15. Method as claimed in claim 14, **characterised in that** the controlled device represents an actuator which changes its state or its position in dependence upon the measurement signal.

16. Method as claimed in claim 14, **characterised in that** the controlled device represents a bus subscriber.

17. Method as claimed in claim 14, **characterised in that** the controlled device represents an evaluation circuit.

18. Method as claimed in any one of claims 10 to 17, **characterised in that** the first transmit-and-receive system (1) represents a sensor device.

## Revendications

1. Agencement pour la transmission séparée au niveau du potentiel de signaux entre un premier système d'émission et de réception (1) et un second système d'émission et de réception (2), comprenant :
des tronçons de paires de lignes d'émission et de réception (6a, 6b ; 7a, 7b ; 8a, 8b), qui relient les deux systèmes d'émission et de réception (1, 2) par un unique canal bidirectionnel ;
un convertisseur de séparation (3) entre deux paires de lignes d'émission et de réception voisines (6a, 6b ; 7a, 7b) ;
un générateur de signal avertisseur (9), qui est raccordé côté secondaire au convertisseur de séparation (3), de sorte qu'un signal avertisseur (U₂) peut être analysé côté primaire,
**caractérisé :**
**en ce que** le convertisseur de séparation (3) est intégré dans un transmetteur de courant continu (4), au circuit primaire (45) duquel des signaux de courant continu (I_{N1}) peuvent être amenés à partir du premier système (1), lesquels signaux sont convertis en signaux de courant alternatif et reconvertis dans le circuit secondaire (46) en signaux de courant continu (I_{N2}), le transmetteur de courant continu (4) étant utilisé pour la transmission de signal du premier système (1) au second système (2) dans le court-circuit ; et
**en ce qu'**un convertisseur électronique I/I ou I/U (5) est intégré dans un tronçon (8a, 8b) des paires de lignes d'émission et de réception, convertisseur sur le côté entrée duquel les signaux du circuit secondaire (46) s'appliquent et sur le côté sortie duquel des signaux utiles sont envoyés sous forme de signaux de courant ou de tension au second système (2).

2. Agencement selon la revendication 1, **caractérisé en ce que** le générateur de signal avertisseur (9) représente une source de tension contrôlée en ligne avec le circuit secondaire (46) du transmetteur de courant continu (4), et **en ce que** le premier système d'émission et de réception (1) amène un signal de courant normal (I_{N1}) au circuit primaire (45) du transmetteur de courant continu (4) et, lors de la survenance d'une variation de tension due à un signal avertisseur, augmente la tension d'injection (U₁) d'une valeur, comme celle qui correspond à la valeur (U₂) de la tension, injectée côté secondaire, du générateur de signal avertisseur (9), afin de déterminer la valeur du signal avertisseur à partir de la tension d'injection mesurée sur le circuit primaire (45).

3. Agencement selon la revendication 1 ou 2, **caractérisé en ce que** le générateur de signal avertisseur (9) est raccordé à une première entrée d'un amplificateur opérationnel (51) du convertisseur électronique I/I ou I/U (5), sur l'autre seconde entrée duquel le circuit secondaire (46) du transmetteur de courant continu (4) s'applique, et **en ce que** la sortie de l'amplificateur opérationnel (51) est ramenée sur la seconde entrée de l'amplificateur opérationnel (51).

4. Agencement selon l'une des revendications 1 à 3, **caractérisé en ce que** le second système d'émission et de réception (2) présente une source de signal de tension alternative (11), dont le signal de tension alternative (U_{w}) est modulé sur le signal de courant continu (I_{N2}) reçu, et est ainsi couplé par un condensateur (C_{K}) jusqu'à une résistance (R) dans l'entrée du convertisseur I/I ou I/U (5), le signal de tension alternative augmentant le rapport de masse direct du convertisseur I/I ou I/U électronique (5) et le convertisseur I/I ou I/U électronique (5) modulant par ses propriétés de réglage le signal de tension alternative (U_{w}) sur le courant côté secondaire (I_{N2}) du signal de courant normal (I_{N1}), et le premier système d'émission et de réception (1) est ainsi forcé de mettre à disposition la même tension sous forme de tension d'alimentation (U₁).

5. Agencement selon la revendication 3, **caractérisé en ce que** le générateur de signal avertisseur (9) est formé par une source de tension (92) de basse impédance, qui est raccordée d'une part au côté secondaire (46) du transmetteur de courant continu (4) et est raccordée d'autre part par un condensateur (C_{K}) à un appareil de terrain avec une charge (15) et un générateur de signal de tension alternative (11), le signal avertisseur, modulé sous forme de signal de tension alternative sur le courant côté secondaire (I_{N2}) du signal de courant normal (I_{N1}), étant transmis au premier système d'émission et de réception (1).

6. Agencement selon l'une des revendications 1 à 5, **caractérisé en ce que** les lignes de raccordement du côté primaire (45) du convertisseur de séparation (3) et les lignes de raccordement du côté secondaire (46) du convertisseur de séparation (3) sont réversibles de façon synchrone pour former un convertisseur de courant à demi-pont.

7. Agencement selon la revendication 6, **caractérisé en ce que**, pour la commutation, des interrupteurs actifs (35, 37a, 37b, 43a, 43b) sont prévus dans le circuit primaire (45) et soit des commutateurs actifs (36, 38a, 38b, 44a, 44b) soit des diodes (47, 48) sont prévus dans le circuit secondaire (46).

8. Agencement selon l'une des revendications 1 à 5, **caractérisé en ce que** les lignes de raccordement du côté primaire (45) du transformateur de séparation (3) et les lignes de raccordement du côté secondaire (46) du convertisseur de séparation (3) peuvent être permutées de façon synchrone pour former un convertisseur de courant à pont intégral avec des interrupteurs actifs (37a, 37b ; 38a, 38b).

9. Agencement selon l'une des revendications 1 à 5, **caractérisé en ce que** le convertisseur de séparation (3) est à prise médiane dans son côté primaire (45) et son côté secondaire (46), et **en ce que** les lignes de raccordement (6b₁, 6b₂; 7b₁, 7b₂) du convertisseur de séparation (3) sont réversibles de façon synchrone.

10. Procédé pour la transmission séparée au niveau du potentiel de signaux de courant continu et de courant alternatif entre un premier système d'émission et de réception (1) et un second système d'émission et de réception (2), comprenant les étapes suivantes :
a) dans le premier système d'émission et de réception (1), on obtient des signaux de mesure, qui sont traités comme des signaux de courant continu et des signaux de courant alternatif pour la transmission par un canal bidirectionnel, qui présente des tronçons séparés galvaniquement les uns des autres ;
b) les signaux de courant continu et de courant alternatif sont amenés en utilisant un transmetteur de courant continu (4) avec convertisseur de séparation (3) par le canal bidirectionnel à un convertisseur I/I ou I/U (5) électronique ;
c) le convertisseur I/I ou I/U (5) électronique récupère à partir des signaux de courant continu et de courant alternatif un signal de courant ou de tension correspondant au signal de mesure et le met à la disposition du second système d'émission et de réception (2) ;
d) dans le cas de la transmission d'un signal avertisseur au premier système d'émission et de réception (1) à partir du second système d'émission et de réception (2), le signal avertisseur est amené au circuit secondaire (46) du transmetteur de courant continu (4) et acheminé par le circuit primaire (45) au premier système d'émission et de réception (1).

11. Procédé selon la revendication 10, **caractérisé en ce que** les signaux de mesure représentent des signaux de courant continu d'un générateur de signal de mesure et sont hachés pour la transmission par le convertisseur de séparation (3).

12. Procédé selon la revendication 11, **caractérisé en ce que** les signaux de mesure de courant continu représentent des signaux normaux (I_{N1}) avec des intensités de courant respectivement prédéfinies.

13. Procédé selon la revendication 10 ou 11, **caractérisé en ce que** les signaux avertisseurs représentent des signaux de tension (U₂) injectés sur le côté secondaire (46), qui peuvent être mis en évidence sur le côté primaire (45) par compensation de la variation de tension sur le côté primaire (45).

14. Procédé selon l'une des revendications 10 à 13, **caractérisé en ce que** le premier système d'émission et de réception (1) représente un système programmé par mémoire et **en ce que** le second système d'émission et de réception (2) contient un dispositif commandé, qui réagit sur la base du signal de mesure et ordonne éventuellement le renvoi d'un signal avertisseur.

15. Procédé selon la revendication 14, **caractérisé en ce que** le dispositif commandé représente un actionneur, qui modifie son état ou sa position en fonction du signal de mesure.

16. Procédé selon la revendication 14, **caractérisé en ce que** le dispositif commandé représente un abonné de bus.

17. Procédé selon la revendication 14, **caractérisé en ce que** le dispositif commandé représente un circuit d'analyse.

18. Procédé selon l'une des revendications 10 à 17, **caractérisé en ce que** le premier système d'émission et de réception (1) représente un système capteur.
